# FASCICULE DE BREVET EUROPEEN

(11) **EP 0 351 272 B1**
(45) Date de publication et mention de la délivrance du brevet: **05.01.1994**
(21) Numéro de dépôt: 89401803.5
(22) Date de dépôt: 26.06.1989
(51) Int. Cl.: H02K 5/22, H02K 11/00

(54) **Moteur électrique équipé d'un moyen de jonction modulaire**
Mit modularem Verbindungsmittel ausgestatteter elektrischer Motor
Electrical motor equipped with modular junction means

(30) Priorité: 13.07.1988 FR 8809563
(43) Date de publication de la demande: 17.01.1990
(73) Titulaire: POMPES SALMSON Société Anonyme à directoire dite:, 92504 Rueil Malmaison (FR); WILO WERKE GMBH & CO. Pumpen- und Apparatebau, D-44263 Dortmund (DE)
(72) Inventeur: Kernours, Michel, F-35370 Mondevert (FR); Ciron, Maurice, F-53260 Entrammes (FR); Fournier, Alain, F-53000 Laval (FR); Hahn, Martin, D-4600 Dortmund 1 (DE); Hübner, Jürgen, D-4600 Dortmund 41 (DE); Radzey, Jürgen, D-5840 Schwerte-Holzen (DE)
(74) Mandataire: Hirsch, Marc-Roger

(56) Documents cités:
- EP-A- 0 029 328
- EP-A- 0 149 418
- DE-A- 3 342 967
- DE-U- 8 703 832
- FR-A- 2 453 511
- US-A- 4 656 378

## Description

La présente invention se rapporte à un moteur électrique, notamment pour groupe motopompe, équipé d'un moyen de jonction comportant un jeu de bornes reliées aux divers fils de bobinage de ce moteur, des bornes du jeu de bornes étant reliées à l'intérieur du moyen de jonction à un jeu de bornes de fonction constituant une interface à connexions débrochables destinées à être raccordées par enfichage de bornes à prises ou à griffes à un module de fonction amovible réalisant au moins une fonction de contrôle du moteur, par exemple de régulation, de surveillance, de protection du moteur.

Les pompes sont généralement incluses dans des systèmes de circulation de liquides qui assurent, à la manière du coeur dans le corps humain ou animal, des fonctions vitales pour le maintien en service d'installations importantes comme les installations de chauffage d'un ensemble d'habitation. Les moteurs électriques d'entraînement de ces pompes sont le plus souvent des moteurs du type asynchrone et qui sont raccordés directement au réseau de distribution électrique triphasé ou monophasé. La régulation de la marche de ces moteurs s'effectue par l'intermédiaire d'une boîte à bornes montée directement sur le moteur pour être reliée aux divers bobinages de ce moteur par des connexions électriques montées à demeure à l'intérieur de la carcasse du moteur. Le contrôle et la surveillance de la marche du moteur sont réalisés par l'intermédiaire de liaisons câblées établies entre la boîte à bornes et des organes de surveillance externes.

Afin d'éviter l'établissement de liaisons câblées vers des organes de régulation et de contrôle, on a déjà proposé de venir enficher directement sur la boîte à bornes du moteur un module de protection du moteur apte à déconnecter ce moteur du réseau électrique amené à sa boîte à bornes, en cas de surchauffe du moteur ou de blocage de sa rotation. En variante, on a même proposé de réaliser une boîte à bornes amovible présentant des broches ou des fiches qui viennent s'engager directement sur des prises du bobinage du moteur qui sont noyées à l'intérieur de la carcasse du moteur.

On réalise par ailleurs couramment des modules de sélection manuelle de la vitesse des moteurs asynchrone (de préférence des moteurs asynchrones monophasés dont il est plus facile de faire varier le glissement rotorique) constitués par un boîtier de sélection de vitesses qui, soit comporte un bouton de sélection de vitesses et vient s'enficher sur un socle relié au bobinage du moteur, soit vient s'enficher selon diverses positions de vitesses sur un socle relié à demeure aux bobinages du moteur.

US-A-4 656 378 décrit un stator de moteur électrique comportant des moyens de jonction, des jeux de bornes, un module de fonction amovible réalisant une fonction de protection thermique du moteur par l'intermédiaire d'une surface sensible à la chaleur. Ce module de protection est raccordé par un enfichage de bornes à prises à des bornes d'un connecteur de stator formant un moyen de jonction. Par ailleurs, DE-A-3 342 967 décrit un moteur électrique de pompe comportant des composants enfichables formant modules de fonctions munis de connexions de branchement vers l'extérieur. Le module de fonctions interchangeable peut contrôler la vitesse du moteur (y compris à l'aide d'un bouton de commutation de vitesse), la puissance du moteur, ainsi que le dispositif de sécurité du moteur et la sensibilité de ce dispositif de sécurité.

Tous ces dispositifs connus permettent d'éviter d'avoir à établir des liaisons câblées vers un boîtier de surveillance séparé du moteur et permettent d'abaisser le coût et de diminuer l'encombrement de la fonction globale d'entraînement et de contrôle de l'installation de pompage équipée du moteur électrique d'entraînement. Le besoin s'est cependant exprimé de réaliser des équipements de pompage, notamment pour le chauffage des ensembles d'immeubles, où la régulation est beaucoup plus complexe et automatisée, avec notamment l'intervention d'horloges de programmation de la marche de la ou des pompe(s) nécessitant de disposer de plusieurs options de montage et où les moteurs de pompe disponibles doivent, pour réaliser ces fonctions, être reliés chaque fois directement ou à distance et de façon différente à des organes séparés de régulation et de surveillance.

La présente invention a notamment pour but de faciliter le raccordement des moteurs de pompe à des organes de régulation et de surveillance choisis en option, en utilisant un moteur équipé d'un moyen de jonction standard pour tous les moteurs et muni de contacts électriques faciles à manipuler par un électricien ou même un simple installateur sans avoir à faire appel à la soudure ou à des outillages spéciaux.

A cet effet, selon l'invention, l'un des modules de fonctions amovibles comporte uniquement des broches ou bornes d'enfichage sur l'interface du moteur et leur raccordement à un dispositif de surveillance du fonctionnement du moteur indiquant localement ou à distance, par exemple, la présence de la tension d'alimentation et/ou le sens de rotation moteur et/ou un défaut moteur.

Un autre des modules de fonctions amovibles peut comporter une horloge de programmation du fonctionnement du moteur, le cas échéant avec un système de sélection de la marche du moteur en programmation automatique ou en marche manuelle, cette horloge étant rapportée de façon amovible sur le module afin de permettre son échange et/ou sa disposition à distance à des fins de téléréglage.

En variante, lorsque le moyen de jonction comporte des bornes de réglage de la vitesse destinées à être raccordées à un boîtier commutable de sélection manuelle de vitesse, le boîtier commutable de sélection de vitesse est enfiché sur le jeu de bornes de réglage de vitesse à travers un logement du module de fonction.

Selon encore un autre mode de réalisation, le module de fonctions amovibles comporte un branchement raccordé aux bornes de réglage de la vitesse à la place du boîtier commutable de sélection de vitesse, vers un dispositif de commande indépendant de la vitesse du moteur et susceptible d'indiquer à distance le sens de rotation du moteur et/ou la présence de la tension sur le moteur et/ou d'assurer à distance la sécurité de fonctionnement du moteur.

Selon un dernier mode de réalisation, les modules de fonctions peuvent comporter chacun des bornes de sortie permettant de les associer ensemble pour réaliser par exemple une téléalarme collective.

D'autres buts, avantages et caractéristiques apparaîtront à la lecture de la description de divers modes de réalisation de l'invention, faite à titre non limitatif et en regard du dessin annexé, où:
- - la figure 1: représente schématiquement et en vue éclatée un moteur électrique selon l'invention avec deux types d'éléments amovibles enfichables sur une embase dont il est susceptible d'être équipé;
- - la figure 2: représente schématiquement un moteur selon l'invention avec les divers types d'éléments amovibles enfichables qu'il est susceptible de recevoir en option selon les fonctions de contrôle et de surveillance à réaliser sur ce moteur;
- - la figure 3: représente schématiquement l'un des éléments amovibles enfichables ou "module de fonction" qui est monté sur le moteur électrique selon l'invention;
- - la figure 4: représente schématiquement un autre mode de réalisation du moteur électrique selon l'invention avec les divers types d'éléments amovibles enfichables dont il est susceptible d'être équipé;
- - la figure 5: représente schématiquement encore un autre mode de réalisation du moteur électrique selon l'invention avec les divers types d'éléments enfichables sur une embase dont il est susceptible d'être équipé.

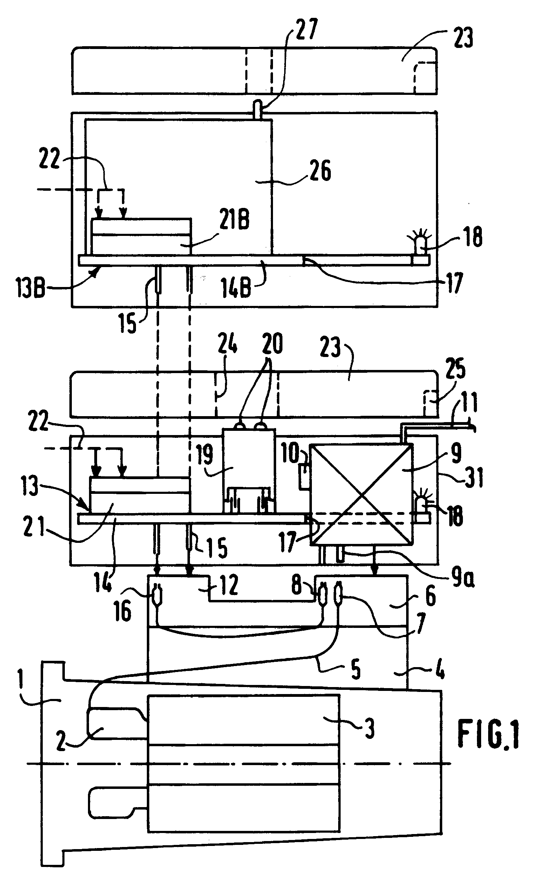

Sur la figure 1, on a représenté schématiquement un moteur électrique 1 du type asynchrone et dont les bobinages 2 du stator 3 sont reliés, par un câblage interne 5 dans une embase 4 qui surmonte le moteur, à un jeu de bornes 6 pour le réglage de la vitesse du moteur. Afin de permettre le réglage de la vitesse du moteur, le bobinage de chaque phase du moteur asynchrone est par exemple subdivisé en plusieurs longueurs qui sont alternativement couplées ou non couplées en série ou en parallèle, ce qui assure un rendement relativement bon du moteur pour toutes les vitesses de rotation de la pompe, imposées en fait au rotor du moteur électrique par le couple résistant du rotor de la pompe.

Le jeu de bornes de vitesses 6 comporte des bornes 7 du côté du bobinage 2 du moteur et des bornes 8 du côté de l'arrivée de la tension d'alimentation. Lorsque le moteur 1 est en service, les bornes 7 et 8 sont reliées entre elles par l'intermédiaire d'un boîtier commutable 9 qui vient s'enficher sur elles. Le boîtier commutable 9 peut comporter un bouton de réglage manuel 10 ou bien peut être enfiché selon diverses orientations dont chacune assure une vitesse de rotation différente du moteur. En variante, le boîtier 9 de commutation du réglage de vitesse peut être relié par un câble 11 à un poste de commutation de vitesses manuel ou automatique placé à distance.

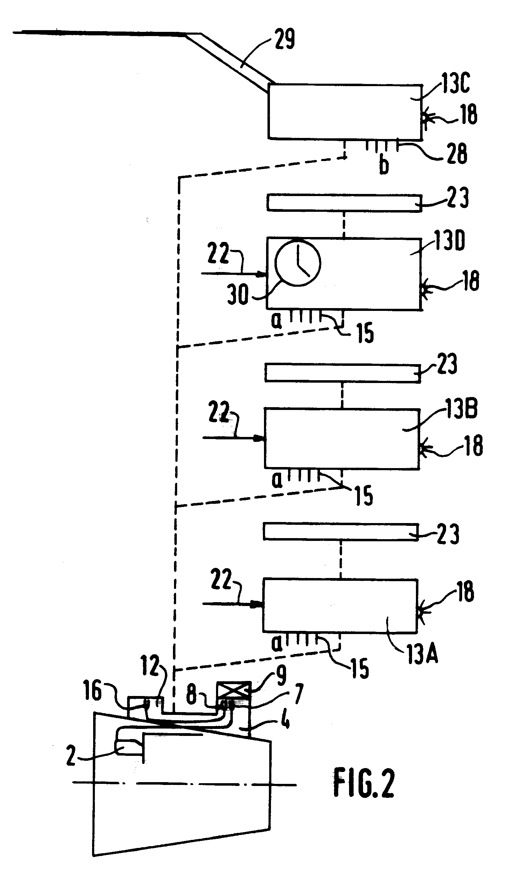

Les bornes 8 (du jeu de bornes 6) placées du côté de l'arrivée de tension sont reliées à l'intérieur de l'embase 4 à un jeu de bornes de fonction 12 formant une interface sur laquelle vient s'enficher un module de fonction 13. On a représenté ici schématiquement sur la figure 1, un premier module de fonction 13A (voir la figure 2) réalisant un minimum de fonctions et constitué par une plaque de circuit imprimé 14 logée dans une enveloppe 31 et munie de broches 15 susceptibles de s'enficher de façon simple et sans faire intervenir des outillages spéciaux (par exemple de soudure) sur les bornes à prises ou à griffes 16 du jeu de bornes de fonction 12. La plaque de circuit imprimé 14 présente un logement 17 traversé par le boîtier commutable de sélection de vitesse 9 et la plaque porte, débouchant sur l'extérieur, un témoin lumineux 18 (par exemple une petite lampe néon) de la présence de la tension sur le moteur. La plaque de circuit imprimé 14 peut comporter, en montage embroché et donc interchangeable et facile à remplacer en cas de défaillance, un détecteur de sens de rotation du moteur 19 indiquant à l'aide de lampes néon 20 alternativement allumées ou éteintes, le sens de rotation du rotor du moteur 1 lorsque ce moteur est un moteur triphasé. Les liaisons électriques de la plaque de circuit imprimé 14 aboutissent à un jeu de bornes ou bornier 21 de raccordement vers l'extérieur, par un câble 22 assurant l'amenée des phases du réseau électrique et la liaison à des organes de télécommande et de télécontrôle. Aprés la mise en place du module de fonction 13 et du boîtier commutable de sélection de vitesse 9 et le branchement des fils du câble 22 sur le bornier 21, l'ensemble du module de fonction logé dans l'enveloppe 31 est recouvert d'un couvercle 23 à travers lequel sont percées des fenêtres 24 et 25 laissant apparaître les indications du détecteur de sens de rotation 19 et du témoin lumineux 18 de tension moteur.

A la partie supérieure de la figure 1, on a représenté un autre module de fonction 13B susceptible d'être monté sur le jeu de bornes de fonction 12 à la place du module de fonction précédent qui sera dénommé par la suite 13A. Les éléments du module 13B, identiques à ceux du module 13A, portent les mêmes repères de référence. La plaque de circuit imprimé 14B de ce module comporte de même un passage 17 pour le boîtier de commutation de vitesse 9 et le témoin lumineux de tension moteur 18 ainsi que des fiches 15 d'enfichage sur le boîtier de fonction 12. La plaque de circuit imprimé 14B porte en plus un dispositif 26 de protection thermique du moteur avec un bouton de réarmement manuel 27 qui vient dépasser en dehors du couvercle 23. Un bornier 21B est relié par un câble 22 au réseau triphasé et à des organes de télésurveillance et de télécontrôle éventuels.

On a représenté sur la figure 2 l'ensemble des divers modules de fonction séparés qui peuvent être montés sur l'embase 4 qui surmonte le moteur, par l'intermédiaire de broches de connexions a ou b enfichées respectivement sur le jeu de bornes de fonction 12 ou sur le jeu de bornes de vitesse 6. On reconnaît le module de fonction 13A équipé du dispositif de surveillance du fonctionnement du moteur, que l'on peut utiliser en première option, et le module de fonction 13B équipé du dispositif de protection thermique moteur, que l'on peut utiliser en deuxième option.

Comme troisième option, on peut utiliser un module 13C spécialement prévu pour la télésurveillance et la télécommande du moteur électrique 1. Ce module simplifié 13C comporte en fait uniquement des broches 28 (bornes b) de branchement et de raccordement aux bornes 7 du jeu de bornes 6 de l'embase 4 du moteur et une lampe témoin 18 indiquant la mise sous tension du moteur 1. Il assure le raccordement, par un câble 29, des bornes au réseau électrique via des organes et/ou un tableau de télécommande et de télésurveillance. Le module 13C qui n'assure qu'une fonction de branchement peut comporter un couvercle intégré remplaçant le couvercle séparé 23.

Une quatrième option de module de fonction est constituée par le module 13D qui comporte une horloge 30 de programmation de la marche du moteur au cours du temps, notamment pour faire varier la vitesse du moteur selon que l'on se trouve en marche de nuit ou en marche de jour sur un circulateur de chauffage. L'horloge de programmation 30 présentant le plus souvent un encombrement beaucoup plus important que celui du module de fonction, est généralement placée à distance et reliée au module de fonction par un câblage, mais certaines horloges compactes et simplifiées sont directement intégrées au module 13D ou enfichées sur lui.

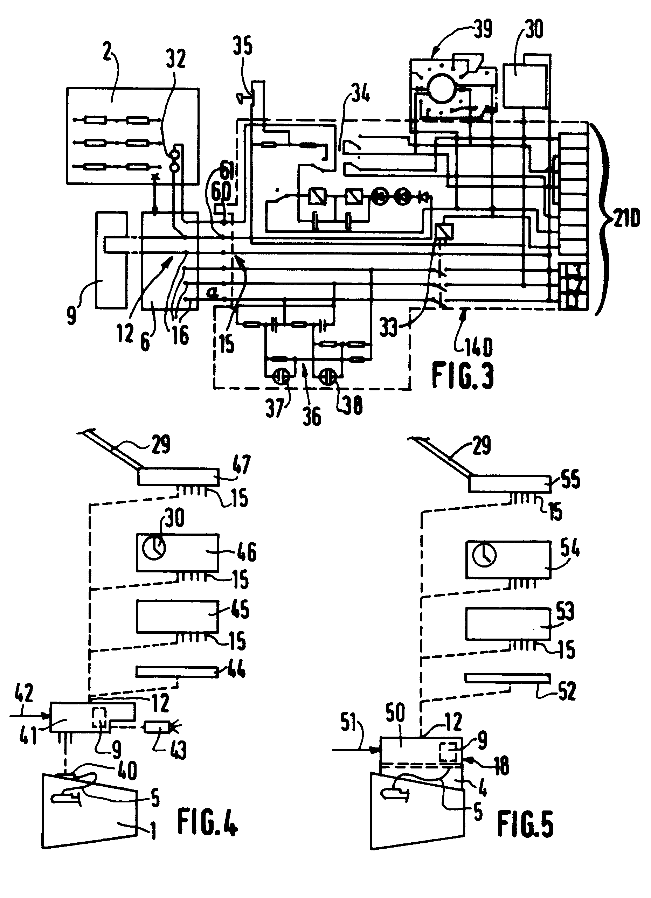

La figure 3 représente de façon schématique les branchements du module 13D sur sa plaque de circuit imprimé 14D avec les éléments qui viennent se raccorder à cette plaque 14D à l'intérieur du module 13D et lorsque le module est branché sur le moteur 1 c'est-à-dire sur le jeu de bornes de fonction 12 avec le boîtier commutable 9 du sélecteur de vitesse enfiché sur le jeu de bornes de vitesses 6. Le stator 2 du moteur 1 dont les trois bobinages triphasés sont chacun subdivisés en deux, présente ici neuf fils de sortie qui sont raccordés à demeure au jeu de bornes de vitesses 6 relié à l'intérieur de l'embase 4 (non représentée) aux bornes à prises 16 du jeu de bornes de fonction 12. Un dispositif de surveillance thermique du moteur 32 (connu sous la dénomination commerciale "klixon") est placé au contact des fils du bobinage du moteur et est relié à deux des bornes 16 pour déclencher la coupure de l'alimentation électrique du moteur en cas de surchauffe de celui-ci. Les bornes de fonction 12 constituent ainsi sur l'embase 4 du moteur une interface à connexions débrochables qui est reliée de façon aisément amovible au jeu de broches 15 porté par la plaque de circuit imprimé 14D.

Sur les liaisons de la plaque de circuit imprimé, on reconnaît l'amenée des phases du réseau triphasé à partir des bornes L1, L2, L3 du bornier 21D, jusqu'à un interrupteur 33 contrôlé par le dispositif de surveillance thermique 32. L'interrupteur 33 est équipé d'un relais de maintien de défaut 34 dont les circuits électriques et électroniques assurent le maintien de la coupure de l'interrupteur 33 après son déclenchement jusqu'à une intervention manuelle sur un interrupteur 35 généralement combiné à une indication de défaut, par exemple à lampe néon. Entre l'interrupteur 33 et les broches de liaison 15 vers le jeu de bornes de fonction, est branché un indicateur de sens de rotation 36, par exemple à deux lampes néon 37 et 38 dont chacune, lorsqu'elle est allumée isolément, indique à la fois que le moteur 1 est sous tension et qu'il est branché pour tourner dans un sens de rotation déterminé.

La plaque de circuit imprimé 14D comporte par ailleurs des liaisons vers des bornes 39 de branchement amovible à une horloge de programmation 30. L'horloge 30 qui est branchée, pour son alimentation électrique, entre les bornes L1 et L2 de l'alimentation triphasée est généralement rapportée sur le module de fonction 13D afin de permettre son échange et le cas échéant, sa disposition à distance à des fins de téléréglage. Dans ce dernier cas, un câblage adéquat est branché sur les bornes de branchement 39 à la place de l'horloge.

Selon un autre mode de réalisation du moteur selon l'invention, représenté sur la figure 4, le moteur 1 comporte un connecteur à embrochage 40 relié à demeure aux fils de bobinage du moteur par un câblage interne 5 et ce connecteur 40 reçoit une boîte à bornes amovible 41 qui vient s'embrocher sur les connections (non représentées) du connecteur 40 et qui est reliée par un câble 42 à une alimentation électrique du moteur. La boîte à bornes 41 peut recevoir en liaison débrochable un dispositif de témoin de tension et de sens de rotation 43. Selon l'invention, la boite à bornes 41 constitue un moyen de jonction du moteur 1 qui comporte une interface à connexions débrochables 12 sur laquelle on peut venir raccorder un module de fonction remplissant au moins une fonction de contrôle du moteur.

On voit sur la figure 4 que l'interface 12 peut, dans un premier cas, ne pas être utilisée, un couvercle 44 étant rapporté sur la boite à bornes 41 qui assure alors par elle-même la fonction de marche du moteur et, le cas échéant, le réglage de vitesse 9 et la fonction de contrôle du moteur. Dans un deuxième cas, le module de fonction 45 muni de broches de raccordement 15 à l'interface 12, comporte par exemple un boîtier commutable de sélection de vitesse et un système de sécurité de fonctionnement du moteur avec une protection thermique.

Dans un troisième cas, le module de fonction 46 comporte en plus des éléments du module 45 une horloge 30 de programmation de la marche du moteur. Dans un quatrième cas de réalisation du module de fonction, le module 47 est semblable au module 13C et comporte uniquement des broches et leur raccordement à un câble 29 relié à distance à une installation de contrôle et de surveillance du moteur, y compris au branchement d'un boîtier de sélection de vitesse.

La figure 5 représente un autre mode de réalisation d'une famille de moteurs électriques selon l'invention. L'embase 4 du moteur 1 est ici raccordée de façon permanente par un cablage interne à une boite à bornes 50 reliée à une alimentation électrique 51 du moteur et qui comporte des bornes de réglage de la vitesse (non représentées) destinées à être raccordées à un boîtier commutable de sélection de vitesse 9 et une interface 12 de connexion à différents modules de fonction 53, 54, 55. Selon un premier mode de réalisation du moteur 1, celui-ci est équipé uniquement de sa boite à bornes et du boîtier commutable de sélection de vitesse 9 et l'interface 12 qui n'est pas utilisée est recouverte par un couvercle 52. Selon une deuxième forme de réalisation, le module de fonction 53 est muni de broches 15 de raccordement à l'interface 12 et d'un système de sécurité de fonctionnement du moteur avec protection thermique comme le module 45.

Selon la troisième forme de réalisation représentée à la figure 5, le module de fonction 54 comporte des broches de raccordement à une horloge 30 et selon la quatrième forme de réalisation, le module de fonction 55 semblable au module 47 comporte uniquement des broches 15 et leurs raccordements à un câble 29 relié à distance à une installation de contrôle et de surveillance du moteur. Selon le mode de réalisation de la figure 5, le module de fonction qui ne comporte plus de boîtier commutable de sélection de vitesse 9, puisque ce dernier est inclus dans la boite à bornes 50, est un sous-ensemble complètement fermé sans autre sortie que ses connexions d'interface 15 et 29 (dans le cas du télécontrôle).

Le montage d'un moteur selon l'invention est réalisé à partir d'un moteur standard équipé d'un moyen de jonction (embase simple 4 avec ou sans les boîtes à bornes 41 ou 50) standard. On choisit ensuite, pour le premier mode de réalisation représenté à la figure 2, un module de fonction du type 13A, 13B, 13C ou 13D, selon les besoins de l'installation de pompage et l'on enfiche ce module sur l'embase 4 en le raccordant aux réseaux extérieurs et aux organes éventuels de contrôle et de surveillance à distance tels qu'une téléalarme. Pour terminer le montage, il suffit d'enficher le boîtier commutable 9 de sélection de vitesse (il peut également être enfiché à l'avance, la plaque de circuit imprimé venant ensuite entourer le boîtier 9 par l'ouverture 17) et de mettre en place le couvercle 23.

Si l'on souhaite ajouter à une installation existante de moteur selon l'invention de nouvelles fonctions, par exemple de télésurveillance et/ou de télécommande, on laisse le moteur 1 en place avec son embase 4 et on remplace par exemple le module de fonction 13A par un module 13C permettant, par simple enfichage, l'établissement des fonctions supplémentaires requises.

Dans la solution représentée à la figure 4, le moteur standard 1 muni de son connecteur à embrochage 40 est équipé, successivement par embrochage, de la boite à bornes 41 raccordée à l'alimentation électrique 42 et munie du témoin de tension et de sens de rotation 43, puis selon les fonctions requises, du couvercle 44 ou de l'un des modules de fonction 45, 46 ou 47 engagé par ses broches 15 dans les pinces de l'interface 12.

Le montage du mode de réalisation de l'invention représenté à la figure 5 s'effectue à partir d'un moteur équipé de façon standard d'une embase 4 raccordée à une boite à bornes 50. Pour le montage, la boite à bornes 50 est raccordée à l'alimentation électrique 51 et munie d'un boitier commutable 9 monté dans la position de vitesse souhaitée. On vient ensuite embrocher sur la boite à bornes 50, selon les fonctions requises, le couvercle 52 ou l'un des modules de fonction 53, 54 ou 55 par les broches 15. On peut bien entendu, pour réaliser de nouvelles fonctions, substituer aux couvercles 44 ou 52 ou à celui des modules de fonctions 45, 46, 47 ou 53, 54, 55 qui est monté, l'un quelconque de ces couvercles ou modules de fonction.

Les modules de fonction de plusieurs pompes peuvent comporter des bornes de sortie permettant de les associer ensemble, par exemple pour réaliser une téléalarme collective. Dans ce cas, les bornes des détecteurs thermiques de tous les moteurs (bornes 60 et 61 sur la plaque de circuit imprimé représentée à la figure 3) sont par exemple montées en série et leurs sorties sont amenées à une armoire de télésurveillance (non représentée), ce qui permet par des moyens simples et économiques de détecter à distance la défaillance de l'une quelconque des pompes entraînées par ces moteurs.

## Revendications

1. Moteur électrique, notamment pour groupe motopompe, équipé d'un moyen de jonction (4), comportant un jeu de bornes (7, 8) reliées aux divers fils de bobinage de ce moteur, des bornes (8) du jeu de bornes étant reliées à l'intérieur du moyen de jonction (4) à un jeu de bornes de fonction (12) constituant une interface à connexions débrochables (16) destinées à être raccordées par enfichage de bornes à prises ou à griffes (15, 16) à un module de fonction amovible (13) réalisant au moins une fonction de contrôle du moteur, par exemple de régulation, de surveillance, de protection du moteur, caractérisé en ce que l'un (13C, 47, 55) des modules de fonctions amovibles comporte uniquement des broches ou bornes (15, 28) d'enfichage sur l'interface (12, 6) du moteur (1) et leur raccordement (câble 29) à un dispositif de télésurveillance du fonctionnement du moteur indiquant à distance, par exemple, la présence de la tension d'alimentation et/ou le sens de rotation moteur et/ou un défaut moteur.

2. Moteur selon la revendication 1, caractérisé en ce qu'un autre (13D, 46, 54) des modules de fonctions amovibles comporte une horloge (30) de programmation du fonctionnement du moteur, le cas échéant avec un système de sélection de la marche du moteur en programmation automatique ou en marche manuelle, cette horloge étant rapportée de façon amovible sur le module afin de permettre son échange et/ou sa disposition à distance à des fins de téléréglage.

3. Moteur selon la revendication 1 ou 2, dans lequel le moyen de jonction (4) comporte des bornes (7) de réglage de la vitesse et destinées à être raccordées à un boîtier commutable de sélection manuelle de vitesse (9), caractérisé en ce que le module de fonctions amovible (13C) comporte un branchement raccordé aux bornes (7) de réglage de la vitesse, à la place du boîtier commutable de sélection de vitesse (9), vers un dispositif de commande indépendant de la vitesse du moteur, et susceptible d'indiquer à distance le sens de rotation du moteur et/ou la présence de la tension sur le moteur et/ou d'assurer à distance la sécurité de fonctionnement du moteur.

4. Moteur selon les revendications 1 à 3, caractérisé en ce que les modules de fonctions (13C, 13D; 46, 47; 54, 55) comportent chacun des bornes de sortie permettant de les associer ensemble pour réaliser par exemple une téléalarme collective.

## Claims

1. Electric motor, particularly for a motor-driven pump assembly, fitted with a connection means (4) comprising a set of terminals (7, 8) connected to the various leads of the windings of the motor, some of the terminals (8) of the set of terminals being joined, within the connection means (4) to a set of function terminals (12) constituting a releasable connection interface (16) adapted to be connected by male or female terminals (15, 16) to a removable function module (13) performing at least one motor control function, for example regulation, monitoring or protection of the motor, characterized in that one (13C, 47, 55) of the releasable function modules only includes terminals or pins (15, 28) for plugging into the interface (12, 6) of the motor (1) and connection thereof (cable 29) to a device for remotely monitoring operation of the motor providing remote indication of, for example, presence of the supply voltage and/or the direction of rotation of the motor and/or a fault in the motor.

2. Motor according to claim 1, characterized in that another one (13D, 46, 54) of the releasable function modules (13D) includes a clock (30) for programming the motor operation, optionally with a system for selecting programmed automatic operation or manual operation of the motor, said clock being releasably attached to the module to allow its replacement and/or remote location for remote control purposes.

3. Motor according to claim 1 or 2, in which the connection means (4) includes speed adjusting terminals (7) and adapted for connection to a switchable box or sub-assembly for manual speed selection (9) characterized in that the releasable function module (13C) includes a branch connection joined to the speed regulating terminals (7), in place of the switchable box or sub-assembly for manual speed selection of the motor, and adapted to provide a remote indication of the direction of rotation of the motor and/or the presence of voltage at the motor and/or to provide remote safety facilities of the motor operation.

4. Motor according to claims 1 to 3, characterized in that the functions modules (13C, 13D; 46, 47; 54, 55) each include output terminals allowing them to be associated together to provide, for example, a collective remote alarm unit.

## Patentansprüche

1. Mit einem Verbindungselement (4) ausgestatteter Elektromotor, insbesondere für eine Motorpumpengruppe, mit einem Satz von an die verschiedenen Wicklungsdrähte des Motors angeschlossenen Anschlüssen (7, 8), wobei Anschlüsse (8) des Anschlußsatzes im Innern des Verbindungselements (4) mit einem Satz von Funktionsanschlüssen (12) verbunden sind und dabei eine Schnittstelle mit abziehbaren Verbindungen (16) bilden, die dazu bestimmt sind, durch Einstecken von Stiften in Kupplungen oder Klauen (15, 16) mit einem abnehmbaren Funktionsmodul (13) verbunden zu werden, das wenigstens eine Motorsteuerfunktion erfüllt, zum Beispiel die Regelung, die Überwachung oder den Schutz des Motors, dadurch gekennzeichnet, daß eines (13C, 47, 55) der abnehmbaren Funktionsmodule nur Stifte oder Klemmen (15, 28) zum Aufstecken auf die Schnittstelle (12, 6) des Motors (1) und den Anschluß (Kabel 29) dieser Stifte oder Klemmen an eine Einrichtung zur Fernüberwachung des Motorbetriebs aufweist, um über eine Entfernung hinweg zum Beispiel das Anliegen der Versorgungsspannung und/oder die Motordrehrichtung und/oder einen Motordefekt anzuzeigen.

2. Motor nach Anspruch 1, dadurch gekennzeichnet, daß ein anderes (13D, 46, 54) der abnehmbaren Funktionsmodule eine Uhr (30) zum Programmieren des Motorbetriebs aufweist, gegebenenfalls mit einem System zum Auswählen des Motorlaufs in automatischer Programmierung oder in manuellem Betrieb, wobei diese Uhr abnehmbar auf dem Modul sitzt, um ihren Austausch und/oder ihre Fernanordnung zu Zwecken einer Fernregelung zu ermöglichen.

3. Motor nach Anspruch 1 oder 2, bei dem das Verbindungselement (4) Anschlüsse (7) zur Regelung der Geschwindigkeit aufweist, die dazu bestimmt sind, mit einer Schaltdose (9) zur manuellen Geschwindigkeitsauswahl verbunden zu werden, dadurch gekennzeichnet, daß das abnehmbare Funktionsmodul (13C) einen Zweig aufweist, der einerseits anstelle der Geschwindigkeitsauswahl-Schaltdose (9) mit den Geschwindigkeitsregel-Anschlüssen (7) und andererseits mit einem unabhängigen Motorgeschwindigkeits-Steuerorgan verbunden ist, das ausgebildet ist, über eine Entfernung hinweg die Motordrehrichtung und/oder das Anliegen der Motorspannung anzuzeigen und/oder über eine Entfernung hinweg die Sicherheit des Motorbetriebs zu gewährleisten.

4. Motor nach der Ansprüche 1 bis 3, dadurch gekennzeichnet, daß die Funktionsmodule (13C, 13D; 46, 47; 54, 55) jeweils Ausgangsanschlüsse aufweisen, die es ermöglichen, sie zusammenzuschalten, um zum Beispiel einen Sammel-Fernalarm zu realisieren.
